# EUROPEAN PATENT SPECIFICATION

(11) **EP 1 914 823 B1**
(45) Date of publication and mention of the grant of the patent: **24.02.2010**
(21) Application number: 07253919.0
(22) Date of filing: 03.10.2007
(51) Int. Cl.: H01M 4/02, H01M 4/06, H01M 4/36, H01M 6/16

(54) **Hybrid cathode design for an electrochemical cell**
Hybridkathodenentwurf für eine elektrochemische Zelle
Design de cathode hybride pour cellule électrochimique

(30) Priority: 03.10.2006 US 827956 P
(43) Date of publication of application: 23.04.2008
(73) Proprietor: Greatbatch Ltd., Clarence, NY 14031 (US)
(72) Inventor: Freitag, Gary, East Aurora, NY 14052 (US); Frustaci, Dominick, Williamsville, NY 14221 (US)
(74) Representative: Duckett, Anthony Joseph

(56) References cited:
- EP-A- 1 207 567
- EP-A- 1 326 295

## Description

### CROSS-REFERENCE TO RELATED APPLICATION

This application claims priority from U.S. Provisional Application Serial No. 60/827,956, filed October 3, 2006.

### BACKGROUND OF THE INVENTION

### 1. Field of the Invention

This invention relates to the conversion of chemical energy to electrical energy. In particular, the present invention relates to a sandwich cathode for an electrochemical cell. The sandwich cathode comprises a first cathode active material mixed with non-active materials including conductive diluents and a binder to provide a first cathode active mixture having a relatively high rate capability in comparison to a second cathode active material mixture. However, the energy density of the first cathode active material mixture is greater than or equal to the second energy density of the second cathode active material mixture. The relative energy densities of the first and second cathode active material mixtures are tailored by the addition of the non-active conductive diluents and binder. In one embodiment, the first and second cathode active material mixtures are contacted to the opposite sides of an intermediate current collector. This cathode design is useful in electrochemical cells that power implantable medical devices requiring a high rate of discharge, stable operation, and predictable end-of-life.

### 2. Description of Related Art

Improvements in implantable cardiac defibrillators and the electrochemical cells that power them have enabled the use of a single cell to power a defibrillator. However, the requisite cell must have both a high overall energy density and a high rate capability. The capacity of the electrochemical cell is not only dependent on the electrode assembly design and packing efficiency, it also is dependent on the type of active materials used.

Certain patents have disclosed electrodes that provide a cell having both a high overall energy density and a high rate capability. For example, U.S. Pat. No. 5,744,258 to Bai et al. discloses a hybrid electrode for a high power, high energy, electrical storage device. The electrode contains both a high-energy electrode active material and a high-rate electrode active material. The first electrode active material has a higher energy density than the second electrode active material, and the second electrode active material has a higher rate capability than the first electrode active material. The two active materials are deposited on a current collector and the electrode is used to make an energy storage device that exhibits both the high-rate capability of a capacitor and the high energy capability of a battery. The materials can be co-deposited on the current collector in a variety ot ways, either in superimposed layers, adjacent layers, intermixed with each other or one material coating the other to form a mixture that is then deposited on the current collector. The disclosure of this patent is incorporated herein by reference.

U.S. Pat. No. 6,551,747 to Gan, which is assigned to the assignee of the present invention and incorporated herein by reference, describes a sandwich cathode design having a first cathode active material of a relatively high energy density but of a relatively low rate capability sandwiched between two current collectors and with a second cathode active material having a relatively low energy density but of a relatively high rate capability in contact with the opposite sides of the current collectors. A preferred low energy density/high rate capability cathode active material is silver vanadium oxide (SVO), and a preferred high energy density/low rate capability active material is fluorinated carbon (CFₓ). The cathode design is useful for powering an implantable medical device requiring a high rate discharge application.

It is generally recognized that for lithium cells, silver vanadium oxide (SVO) and, in particular, ε-phase silver vanadium oxide (AgV₂O_{5.5}), is preferred as the cathode active material in high rate cell discharge applications. This active material has a theoretical volumetric capacity of 1.37 Ah/ml. By comparison, the theoretical volumetric capacity of CFₓ (x = 1.1) is 2.42 Ah/ml, which is 1.77 times that of ε-phase silver vanadium oxide. However, for powering a cardiac defibrillator, SVO is preferred because it can deliver high current pulses or high energy within a short period of time. Although CFₓ has higher volumetric capacity, it is not useful as the sole cathode active material in medical devices requiring a high rate discharge application. This is due to its low to medium rate of discharge capability. That is one of the reasons the lithium-SVO/CFₓ cells disclosed by Gan in U.S. Pat. No. 6,551,747 are advantageous for providing both high energy capacity and high discharge rate in a single device.

Nonetheless, there remains a need for improvement in other aspects of cell performance. This includes the need for an electrochemical cell with the desired energy capacity and discharge rate, but with greater performance stability, reduced voltage delay, reduced cell impedance rise, and greater predictability at end-of-life discharge.

### SUMMARY OF THE INVENTION

The present invention fulfils these needs by providing an electrochemical cell comprising an anode, a cathode comprised of a first current collector, a first cathode active material mixture having a first energy density and a first rate capability, and a second cathode active material mixture having a second energy density and a second rate capability, and an electrolyte activating the anode and the cathode. Importantly, the first rate capability of the first cathode active material mixture is greater than the second rate capability of the second cathode active material mixture, and the first energy density of the first cathode active material mixture is greater than or equal to the second energy density of the second cathode active material mixture.

The first cathode active material mixture is comprised of a first active material having a first theoretical energy density combined with a conductive diluent and a binder, and the second cathode active material mixture is comprised of a second active material having a second theoretical energy density combined with a conductive diluent and a binder. The theoretical energy density of the second active material is greater than that of the first active material, but as a result of the addition of the conductive diluent and possible the binder, the energy density of the second cathode active material mixture is less than or equal to the energy density of the first cathode active material mixture. The non-active ingredients comprising the conductive and binder materials are present in an amount greater than ten weight percent and up to about 35 weight percent. In that manner, the energy density of the second active material mixture is modified with non-active ingredients such carbon, or a non-conductive material such as polytetrafluoroethylene. In one preferred embodiment, the first active material is SVO mixed with about 3% graphite and 3% PTFE, by weight, and the second active material is CFₓ mixed with carbon and PTFE having a combined weight percent of about 23% or more.

In one embodiment, the cathode active material mixture is then contacted to the first side of a current collector and the second cathode active material mixture is contacted to the second side thereof. In other embodiments, the cathode is provided in a variety of sandwich configurations of the first and second cathode active materials mixture contacted to at least one and possibly two current collectors, as will be described herein.

The foregoing and additional objects, advantages, and characterizing features of the present invention will become increasingly more apparent upon a reading of the following detailed description.

### DETAILED DESCRIPTION OF THE PREFERRED EMBODIMENTS

The present invention will be described in connection with preferred embodiments, however, it should be understood that there is no intent to limit the invention to the embodiments described. On the contrary, the intent is to cover all alternatives, modifications, and equivalents as may be included within the scope of the invention as defined by the appended claims.

The electrochemical cell of the present invention is of either a primary or a secondary, rechargeable chemistry, the former being preferred. In order for the cell to possess sufficient energy density and discharge capacity required to meet the rigorous requirements of implantable medical devices, the anode for the primary cell is a thin metal sheet or foil of lithium, pressed or rolled on a metallic anode current collector, i.e., preferably comprising titanium, titanium alloy or nickel. Copper, tungsten and tantalum are also suitable materials for the anode current collector. An alternate anode comprises a lithium alloy for example, Li-Si, Li-Al, Li-B, Li-Mg and Li-Si-B alloys and intermetallic compounds. The greater the amounts of the secondary material present by weight in the alloy, however, the lower the energy density of the cell. The anode current collector has an extended tab or lead contacted by a weld to a cell case of conductive metal in a case-negative electrical configuration. Alternatively, the anode may be formed in some other geometry, such as a bobbin shape, cylinder or pellet, to allow for a low surface cell design.

A cathode of at least two electrically conductive materials serves as the other cell electrode. The cathode is preferably of solid materials and the electrochemical reaction at the cathode involves conversion of ions that migrate from the anode to the cathode into atomic or molecular forms. The solid cathode may comprise a first active material of a metal element, a metal oxide, a mixed metal oxide and a metal sulfide, and combinations thereof and a second active material of a carbonaceous chemistry. The metal oxide, the mixed metal oxide and the metal sulfide of the first cathode active material have a relatively higher rate capability than the second cathode active material.

The first active material is formed by the chemical addition, reaction, or otherwise intimate contact of various metal oxides, metal sulfides and/or metal elements, preferably during thermal treatment, sol-gel formation, chemical vapor deposition or hydrothermal synthesis in mixed states. The active materials thereby produced contain metals, oxides and sulfides of Groups IB, IIB, IIIB, IVB, VB, VIB, VIIB and VIII, which includes the noble metals and/or other oxide and sulfide compounds. A preferred first cathode active material is a reaction product of at least silver and vanadium.

One preferred mixed metal oxide is a transition metal oxide having the general formula SMₓV₂O_{y} where SM is a metal selected from Groups IB to VIIB and VIII of the Periodic Table of Elements, wherein x is about 0.30 to 2.0 and y is about 4.5 to 6.0 in the general formula. By way of illustration, and in no way intended to be limiting, one exemplary cathode active material comprises silver vanadium oxide having the general formula AgₓV₂O_{y} in any one of its many phases, i.e., 3-phase silver vanadium oxide having in the general formula x = 0.35 and y = 5.8, γ-phase silver vanadium oxide having in the general formula x = 0.80 and y = 5.40 and ε-phase silver vanadium oxide having in the general formula x = 1.0 and y = 5.5, and combination and mixtures of phases thereof. For a more detailed description of such cathode active materials, reference is made to U.S. Pat. No. 4,310,609 to Liang et al. This patent is assigned to the assignee of the present invention and incorporated herein by reference.

Another preferred composite transition metal oxide cathode material includes V₂O_{z} wherein z ≤ 5 combined with Ag₂O with silver in either the silver(II), silver(I) or silver(0) oxidation state and CuO with copper in either the copper(II), copper(I) or copper(0) oxidation state to provide the mixed metal oxide having the general formula CuₓAg_{y}V₂O_{z}, (CSVO) .
Thus, the composite cathode active material may be described as a metal oxide-metal oxide-metal oxide, a metal-metal oxide-metal oxide, or a metal-metal-metal oxide and the range of material compositions found for CuₓAg_{y}V₂O_{z} is preferably about 0.01 ≤ z ≤ 6.5. Typical forms of CSVO are Cu_{0.16}Ag_{0.67}V₂O_{z} with z being about 5.5 and Cu_{0.5}Ag_{0.5}V₂O_{z} with z being about 5.75. The oxygen content is designated by z since the exact stoichiometric proportion of oxygen in CSVO can vary depending on whether the cathode material is prepared in an oxidizing atmosphere such as air or oxygen, or in an inert atmosphere such as argon, nitrogen and helium. For a more detailed description of this cathode active material reference is made to U.S. Pat. Nos. 5,472,810 to Takeuchi et al. and 5,516,340 to Takeuchi et al. These patents are assigned to the assignee of the present invention and incorporated herein by reference.

The cathode further includes a second cathode active material having a relatively low rate capability but higher energy density in comparison to the first cathode active material. One preferred second cathode active material is a carbonaceous compound prepared from carbon and fluorine, which includes graphitic and nongraphitic forms of carbon, such as coke, charcoal or activated carbon. Fluorinated carbon is represented by the formula (CFₓ)ₙ wherein x varies between about 0.1 to 1.9 and preferably between about 0.5 and 1.2, and (C₂F)ₙ wherein the n refers to the number of monomer units which can vary widely.

Thus, a preferred first cathode active material having a greater rate capability than the second cathode active material is of a mixed metal oxide such as SVO or CSVO. This material is typically provided in a formulation or mixture of, by weight, about 94% SVO and/or CSVO, 3% binder and 3% conductive diluent as the formulation facing the anode. The second active material in contact with the other side of the current collector is, for example, CFₓ. This material is preferably provided in a second active mixture having less than 90% weight percent CFₓ, with the remaining constituents being binder and one or more conductive diluents.

Suitable conductive diluents include acetylene black, carbon black and/or graphite. Metals such as nickel, aluminum, titanium and stainless steel in powder form are also useful as conductive diluents.

A suitable binder material is preferably a thermoplastic polymeric material. The term thermoplastic polymeric material is used in its broad sense and any polymeric material which is inert in the cell and which passes through a thermoplastic state, whether or not it finally sets or cures, is included within the term "thermoplastic polymer". Representative binder materials include polyethylene, polypropylene, polyimide, and fluoropolymers such as fluorinated ethylene, fluorinated propylene, polyvinylidene fluoride (PVDF), and polytetrafluoroethylene (PTFE). Natural rubbers are also useful as the binder material with the present invention.

In Table 1 of U.S. Patent No. 6,551,747, Gan discloses that the theoretical capacity (or theoretical energy density) of CFₓ is 2.42 ampere-hours/ml, and the theoretical capacity of AgV₂O_{5.5} is 1.37 Ah/ml. Gan further discloses at column 5, lines 52 to 55 that, "up to about 10 weight percent of a conductive diluent is preferably added to the cathode mixture to improve conductivity," and that even with such a level of dilution, the energy density of CFₓ remains greater than that of SVO. By way of Example 1, Gan discloses at column 8, lines 3 to 11:
"An electrochemical cell according to the present invention contained cathode no. 1 having 0.3 grams of a Ag₂V₄O₁₁ (SVO) cathode mix consisting of 94% active SVO, 3% of a PTFE binder and 3% of a carbonaceous diluent, by weight, pressed on one side of a cathode current collector (titanium screen, about 4.5 cm²) under 32 tons. The other side of the current collector had 0.2 grams of a CFₓ mix containing 91% active CFₓ, 5% of a PTFE binder and 4% of a carbonaceous diluent pressed thereon under 32 tons."

In Table 2, Gan shows that the "Practical Capacity" (i.e. the actual energy density) of the 94 weight percent AgV₂O_{5.5} is 1.07 Ah/ml, and the practical capacity of the 91 weight percent CFₓ is 1.27 Ah/ml. Thus, Gan teaches that even though the second cathode active material is diluted with non-active ingredients of no greater than 10 weight percent, the energy density of the second cathode active material mixture remains greater than the energy density of the first cathode active material mixture. An electrochemical cell containing a cathode design of SVO/current collector/CFₓ has the advantage of both the high rate capability of SVO and the high energy density of CFₓ. However, there remains an opportunity for improvement in other aspects of cell performance.

According to the present invention, dilution of the second cathode active material beyond the 10 weight percent disclosed in the `747 patent of Gan results in a cell with superior performance in comparison to a Li/SVO cell or a LI/CFₓ cell. Li/SVO cells lack performance stability over long term discharge; i.e. the performance of Li/SVO cells varies depending on how the cell is discharged. Further, voltage delay occurs during the transition from the first discharge plateau to the second discharge plateau of a typical Li/SVO cell profile, making cell discharge difficult to manage from an end user standpoint. Li/SVO cells also develop increasing irreversible impedance during the second half of their discharge. Finally, determination of the remaining capacity in a Li/SVO cell can be difficult due to the relatively light flat load discharge voltage profile. This makes it difficult for device manufacturers to determine when an implanted device needs to be removed from the body. Li/CFx cell have acceptable energy density for powering implantable medical devices, but their low to medium rate of discharge capability makes them unacceptable for high pulsatile application such as required for implantable defibrillators, and the like.

According to the present invention, CFₓ provided in an active mixture with at least one conductive diluent and possibly a binder in combined amounts greater than about 10 weight percent is effective in improving the discharge characteristics of a Li/SVO cell. By adding diluents in the form of conductive and binder materials to the CFₓ, some capacity in the cell is sacrificed, but not to a level that renders the cell unsuitable for use as a power source in an implantable medical device. Further, reduction in cell capacity is more than offset by improvements in discharge performance that are attained from the greater degree of active material dilution. Importantly, cell voltage delay is not observed through the middle of cell life, where it typically occurs in Li/SVO cells, and is greatly diminished later in life. The ability to predict the remaining energy capacity within the cell at a given time is also improved.

In one preferred embodiment, CFₓ as the second cathode active material is diluted to a concentration of about 74 weight percent, with the total amount of diluents being present at about 26 weight percent. Depending upon the active material and specific diluents, the second cathode active material may be diluted to a concentration as low as about 65 weight percent while still maintaining sufficient energy density. Although both conductive and non-conductive ingredients may be used, a preferred diluent for CFₓ is carbon. The use of carbon increases the conductivity of CFₓ. It is believed that this in turn improves the pulse performance of the cell, especially during the first third of the cell's discharge life.

In addition to silver vanadium oxide and copper silver vanadium oxide (CSVO), the first cathode active material may be comprised of V₂O₅, MnO₂, LiCoO₂, LiNiO₂, LiMn₂O₄, TiS₂, Cu₂S, Fes, FeS₂, copper oxide, copper vanadium oxide, and mixtures thereof. In addition to fluorinated carbon, the second cathode active material may be comprised of Ag₂O, Ag₂O₂, CuF₂, Ag₂CrO₄, MnO₂, and mixtures thereof.

In a broader sense, however, it is contemplated by the present invention that the first cathode active material may be any material which has a relatively higher rate capability than the second cathode active material. Additionally, the energy density of the first cathode active material is less than the energy density of the second cathode active material. Moreover, as a result of the addition of the at least one conductive diluent and possibly the binder to the second cathode active material, the energy density of the second cathode active material mixture is reduced to a level less than or equal to that of the first cathode active material mixture. In general, dilution of the second cathode active material in an amount greater than ten weight percent is required to achieve the resulting benefit in improved cell performance. Although some discharge capacity is sacrificed, it is small enough that the cell is still suitable for its intended use as a power source for an implantable medical device. The sacrifice of some capacity is worth the benefit gained in cell performance.

A cathode for a cell of the present invention having a first cathode active material mixture and a second cathode active material mixture may be made in a variety of "sandwich" configurations. The cathode current collector is preferably formed as an elongated sheet having a first side and a second side, with the cathode active material mixtures contacted to the opposite sides thereof. The current collector may be formed from stainless steel, titanium, tantalum, platinum, gold, aluminum, cobalt nickel alloys, nickel-containing alloys, highly alloyed ferritic stainless steel containing molybdenum and chromium, and nickel-, chromium-, and molybdenum-containing alloys. In one embodiment, the current collector is titanium having a coating selected from the group consisting of graphite/carbon material, iridium, iridium oxide and platinum provided thereon.

Additionally, the cathode may include two or more current collectors; the overall design is independent of the exact screen or cell stack configuration. Exemplary cathode designs include:
SVO/current collector/CFₓ, with the SVO facing the anode
CFₓ/first current collector/SVO, with the CFₓ facing the anode
SVO/CFₓ/current collector/CFₓ/SVO
SVO/first current collector/CFₓ/second current collector/SVO
SVO/first current collector/SVO/CFₓ/SVO/second current collector/SVO
CFₓ/first current collector/SVO/second current collector/CFₓ
CFₓ/first current collector/CFₓ/SVO/CFₓ/second current collector/CFₓ

In embodiments in which the active material mixtures are applied in a cohesive form, i.e. as a solid tape, sheet, or a pellet that is compressed against the current collector, a particular active material may be mixed with a binder such as a powdered fluoro-polymer, more preferably powdered polytetrafluoroethylene or powdered polyvinylidene fluoride present at about 1 to about 5 weight percent of the cathode mixture. Further, up to about 10 weight percent of a conductive diluent is preferably added to the cathode mixture to improve conductivity. (As described previously, more than 10 weight percent diluent is added to the second cathode active material to provide the additional benefits to cell performance.)

In embodiments of the invention in which the active materials are delivered in the form of a paste or slurry applied to the current collector, the slurry is provided by dissolving or dispersing the electrode active material, conductive diluent and binder in a solvent. Suitable solvents include water, methyl ethyl ketone, cyclohexanone, isophorone, N-methyl-2-pyrrolidone (NMP), N,N-dimethylformamide, N,N-dimethylacetamide, toluene, and mixtures thereof.

In order to prevent internal short circuit conditions, the sandwich cathode is separated from the Group IA, IIA or IIIB anode by a suitable separator material. The separator is of electrically insulative material, and the separator material also is chemically unreactive with the anode and cathode active materials and both chemically unreactive with and insoluble in the electrolyte. In addition, the separator material has a degree of porosity sufficient to allow flow there through of the electrolyte during the electrochemical reaction of the cell. Illustrative separator materials include fabrics woven from fluoropolymeric fibers including polyvinylidine fluoride, polyethylenetetrafluoroethylene, and polyethylenechlorotrifluoroethylene used either alone or laminated with a fluoropolymeric microporous film, non-woven glass, polypropylene, polyethylene, glass fiber materials, ceramics, polytetrafluoroethylene membrane commercially available under the designation ZITEX (Chemplast Inc.), polypropylene membrane commercially available under the designation CELGARD (Celanese Plastic Company, Inc.) and a membrane commercially available under the designation DEXIGLAS (C. H. Dexter, Div., Dexter Corp.).

The electrochemical cell further includes a nonaqueous, ionically conductive electrolyte which serves as a medium for migration of ions between the anode and the cathode electrodes during electrochemical reactions of the cell. The electrochemical reaction at the electrodes involves conversion of ions in atomic or molecular forms which migrate from the anode to the cathode. Thus, suitable nonaqueous electrolytes are substantially inert to the anode and cathode materials, and they exhibit those physical properties necessary for ionic transport, namely, low viscosity, low surface tension and wettability.

A suitable electrolyte has an inorganic, ionically conductive salt dissolved in a nonaqueous solvent, and more preferably, the electrolyte includes an ionizable lithium salt dissolved in a mixture of aprotic organic solvents comprising a low viscosity solvent and a high permittivity solvent. The inorganic, ionically conductive salt serves as the vehicle for migration of the anode ions to intercalate or react with the cathode active materials. Known lithium salts that are useful as a vehicle for transport of alkali metal ions from the anode to the cathode include LiPF₆, LiBF₄, LiAsF₆, LiSbF₆, LiClO₄, LiO2, LiAlCl₄, LiGaCl₄, LiC(SO₂CF₃)₃, LiN(SO₂CF₃)₂, LiSCN, LiO₃SCF₃, LiC₆FSO₃, LiO₂CCF₃, LiSO₆F, LiB(C₆H₅)₄, LiCF₃SO₃, and mixtures thereof.

Suitable low viscosity solvents invention include esters, linear and cyclic ethers and dialkyl carbonates such as tetrahydrofuran (THF), methyl acetate (MA), diglyme, triglyme, tetraglyme, dimethyl carbonate (DMC), 1,2-dimethoxyethane (DME), 1,2-diethoxyethane (DEE), 1-ethoxy,2-methoxyethane (EME), ethyl methyl carbonate, methyl propyl carbonate, ethyl propyl carbonate, diethyl carbonate, dipropyl carbonate, and mixtures thereof, and suitable high permittivity solvents include cyclic carbonates, cyclic esters and cyclic amides such as propylene carbonate (PC), ethylene carbonate (EC), butylene carbonate, acetonitrile, dimethyl sulfoxide, dimethyl formamide, dimethyl acetamide, γ-valerolactone, γ-butyrolactone (GBL), N-methyl-pyrrolidinone (NMP), and mixtures thereof. In the present invention, the preferred anode is lithium metal and the preferred electrolyte is 0.8M to 1.5M LiAsF₆ or LiPF₆ dissolved in a 50:50 mixture, by volume, of propylene carbonate as the preferred high permittivity solvent and 1,2-dimethoxyethane as the preferred low viscosity solvent.

The assembly of the cells described herein may be in the form of a wound element configuration. That is, the fabricated negative electrode, positive electrode and separator may be wound together in a "jellyroll" type configuration or "wound element cell stack" such that the negative electrode is on the outside of the roll to make electrical contact with the cell case in a case-negative configuration. Using suitable top and bottom insulators, the wound cell stack is inserted into a metallic case of a suitable size dimension. The metallic case may comprise materials such as stainless steel, mild steel, nickel-plated mild steel, titanium, tantalum, aluminum, and niobium, but not limited thereto, so long as the metallic material is compatible for use with the other cell components.

The cell header may be comprised of a metallic disc-shaped body with a first hole to accommodate a glass-to-metal seal/terminal pin feedthrough and a second hole for electrolyte filling. The glass used is of a corrosion resistant type having up to about 50% by weight silicon such as CABAL 12, TA 23, FUSITE 425 or FUSITE 435. The positive terminal pin feedthrough preferably comprises titanium although molybdenum, aluminum, nickel alloy, or stainless steel can also be used. The cell header is typically of a material similar to that of the case. The positive terminal pin supported in the glass-to-metal seal is, in turn, supported by the header, which is welded to the case containing the electrode stack. The cell is thereafter filled with the electrolyte solution described hereinabove and hermetically sealed such as by close-welding a stainless steel ball over the fill hole, but not limited thereto.

The above assembly describes a case-negative cell, which is the preferred construction of the cells of the present invention. As is well known to those skilled in the art, the present electrochemical cells can also be constructed in a case-positive configuration.

It is, therefore, apparent that there has been provided, in accordance with the present invention, an electrochemical cell including a cathode having first and second cathode active material mixtures of defined rate capability and energy density. While this invention has been described in conjunction with preferred embodiments thereof, it is evident that many alternatives, modifications, and variations will be apparent to those skilled in the art. Accordingly, it is intended to embrace all such alternatives, modifications and variations that fall within the broad scope of the appended claims.

## Claims

1. An electrochemical cell comprising:
a) an anode;
b) a cathode comprising a first current collector, a first cathode active material mixture having a first energy density and a first rate capability, and a second cathode active material mixture having a second energy density and a second.rate capability, wherein the first rate capability of the first cathode active material mixture is greater than the second rate capability of the second cathode active material mixture, and the first energy density of the first cathode active material mixture is greater than or equal to the second energy density of the second cathode active material mixture;
c) a separator positioned between the anode and the cathode to prevent direct physical contact between them by allowing for electrochemical reactions to take place; and
d) an electrolyte activating the anode and the cathode.

2. The electrochemical cell of claim 1 wherein the first cathode active material mixture comprises a first active material having a first theoretical energy density and the second cathode active material mixture comprises at least one non-active material and a second active material having a second theoretical energy density.

3. The electrochemical cell of claim 2 wherein the second theoretical energy density of the second active material is greater than the first theoretical energy density of the first active material.

4. The electrochemical cell of claim 3 wherein the first active material is SVO and the second active material is CFₓ.

5. The electrochemical cell of claim 4 wherein the non-active material comprises carbon.

6. The electrochemical cell of claim 5 wherein the non-active material further comprises a non-conductive material.

7. The electrochemical cell of claim 5 wherein the non-active material further comprises polytetrafluoroethylene.

8. The electrochemical cell of claim 1 wherein the first cathode active material is SVO mixed with about 3% graphite and 3% PTFE, by weight relative to the total weight of the mixture, and the second cathode active material is CFₓ mixed with carbon and PTFE having a combined weight percent of about 23% or more relative to the total weight of the mixture.

9. The electrochemical cell of claim 2 wherein the non-active material is present in the second cathode active material in an amount between 10 and 35 weight percent relative to the total weight of the mixture.

10. The electrochemical cell of claim 9 wherein the non-active material comprises carbon and a binder.

11. The electrochemical cell of claim 1 wherein the first current collector is formed as an elongated sheet having a first side and a second side, and the first cathode active material mixture is contacted to the first side of the current collector and the second cathode active material mixture is contacted to the second side of the current collector.

12. The electrochemical cell of claim 11 wherein the first cathode active material comprises SVO and the second cathode active material comprises CFₓ.

13. The electrochemical cell of claim 12 wherein the SVO faces the anode of the cell.

14. The electrochemical cell of claim 1 further comprising a second current collector.

15. The electrochemical cell of claim 14 wherein the first and second current collectors are formed as elongated sheets each having a first side and a second side.

16. The electrochemical cell of claim 15 wherein the first cathode active material comprises SVO and the second cathode active material comprises CFₓ.

17. The electrochemical cell of claim 16 wherein the first cathode active material is SVO mixed with about 3% graphite and 3% PTFE, by weight relative to the total weight of the mixture, and the second cathode active material is CFₓ mixed with carbon and PTFE having a combined weight percent of about 23% or more relative to the total weight of the mixture.

18. The electrochemical cell of claim 16 wherein a first portion of the SVO is contacted to the first side of the first current collector, a second portion of the SVO is contacted to the second side of the first current collector, a third portion of the SVO is contacted to the first side of the second current collector, a fourth portion of the SVO is contacted to the second side of the second current collector, and the CFₓ is sandwiched between the second portion of the SVO and the third portion of the SVO.

19. The electrochemical cell of claim 1 wherein the first cathode active material is selected from the group consisting of SVO, CSVO, V₂O₅, MnO₂, LiCoO₂, LiNiO₂, LiMnO₂, CuO₂, TiS, Cu₂S, FeS, FeS₂, copper oxide, copper vanadium oxide, and mixtures thereof and wherein the second cathode active material is selected from the group consisting of CFₓ, Ag₂O, Ag₂O₂, CuF, Ag₂CrO₄, MnO₂, SVO, and mixtures thereof, and wherein the first and second cathode active materials are different.

20. The electrochemical cell of claim 1 wherein the cathode has a configuration selected from the group consisting of SVO/current collector/CFₓ with the SVO facing the anode, CFₓ/first current collector/SVO with the CFₓ facing the anode, SVO/CFₓ/current collector/CFₓ/SVO, SVO/first current collector/CFₓ/second current collector/SVO, SVO/first current collector/SVO/CFₓ/SVO/second current collector/SVO, CFₓ/first current collector/SVO/second current collector/CFₓ, and CFₓ/first current collector/CFₓ/SVO/CFₓ/second current collector/CFₓ.

21. An electrochemical cell comprising:
a) a lithium anode;
b) a cathode comprising a first current collector, a first cathode active material mixture having a first energy density and a first rate capability and a second cathode active material mixture having a second energy density and a second rate capability, wherein the first cathode active material is SVO mixed with about 3% graphite and 3% PTFE, by weight relative to the total weight of the mixture, to provide the first cathode active material mixture and the second cathode active material is CFₓ mixed with carbon and PTFE having a combined weight percent of about 23% or more relative to the total weight of the mixture to provide the second cathode active material mixture so that the first rate capability of the first cathode active material mixture is greater than the second rate capability of the second cathode active material mixture, and the first energy density of the first cathode active material mixture is greater than or equal to the second energy density of the second cathode active material mixture;
c) a separator positioned between the anode and the cathode to prevent direct physical contact between them by allowing for electrochemical reactions to take place; and
d) an electrolyte activating the anode and the cathode.

22. The electrochemical cell of claim 21 wherein the cathode has a configuration selected from the group consisting of SVO/current collector/CFₓ with the SVO facing the anode, CFₓ/first current collector/SVO with the CFₓ facing the anode, SVO/CFₓ/current collector/CFₓ/SVO, SVO/first current collector/CFₓ/second current collector/SVO, SVO/first current collector/SVO/CFₓ/SVO/second current collector/SVO, CFₓ/first current collector/SVO/second current collector/CFₓ, and CFₓ/first current collector/CFₓ/SVO/CFₓ/second current collector/CFₓ.

## Patentansprüche

1. Elektrochemische Zelle, die umfasst:
(a) eine Anode;
(b) eine Katode, die einen ersten Stromkollektor, ein erstes katodenaktives Materialgemisch mit einer ersten Energiedichte und einer ersten Ratenkapazität und ein zweites katodenaktives Materialgemisch mit einer zweiten Energiedichte und einer zweiten Ratenkapazität aufweist, wobei die erste Ratenkapazität des ersten katodenaktiven Materialgemisches größer ist als die zweite Ratenkapazität des zweiten katodenaktiven Materialgemisches und wobei die erste Energiedichte des ersten katodenaktiven Materialgemisches größer oder gleich der zweiten Energiedichte des zweiten katodenaktiven Materialgemisches ist;
(c) eine Trenneinrichtung, die zwischen der Anode und der Katode positioniert ist, um einen direkten physikalischen Kontakt zwischen ihnen zu verhindern, indem sie zulässt, dass elektrochemische Reaktionen stattfinden; und
(d) einen Elektrolyt, der die Anode und die Katode aktiviert.

2. Elektrochemische Zelle nach Anspruch 1, wobei das erste katodenaktive Materialgemisch ein erstes aktives Material mit einer ersten theoretischen Energiedichte besitzt und das zweite katodenaktive Materialgemisch wenigstens ein nicht aktives Material und ein zweites aktives Material mit einer zweiten theoretischen Energiedichte besitzt.

3. Elektrochemische Zelle nach Anspruch 2, wobei die zweite theoretische Energiedichte des zweiten aktiven Materials größer ist als die erste theoretische Energiedichte des ersten aktiven Materials.

4. Elektrochemische Zelle nach Anspruch 3, wobei das erste aktive Material SVO ist und das zweite aktive Material CFₓ ist.

5. Elektrochemische Zelle nach Anspruch 4, wobei das nicht aktive Material Kohlenstoff enthält.

6. Elektrochemische Zelle nach Anspruch 5, wobei das nicht aktive Material ferner ein nicht leitendes Material enthält.

7. Elektrochemische Zelle nach Anspruch 5, wobei das nicht aktive Material ferner Polytetrafluorethylen enthält.

8. Elektrochemische Zelle nach Anspruch 1, wobei das erste katodenaktive Material SVO ist, das mit etwa 3 Gew.-% Graphit und etwa 3 Gew.-% PTFE in Bezug auf das Gesamtgewicht des Gemisches gemischt ist, und das zweite katodenaktive Material CFₓ ist, das mit Kohlenstoff und PTFE mit einen kombinierten Gewichtsanteil von etwa 23 Gew.-% oder mehr in Bezug auf das Gesamtgewicht des Gemisches gemischt ist.

9. Elektrochemische Zelle nach Anspruch 2, wobei das nicht aktive Material in dem zweiten katodenaktiven Material in einer Menge im Bereich von 20 bis 35 Gew.-% in Bezug auf das Gesamtgewicht des Gemisches vorhanden ist.

10. Elektrochemische Zelle nach Anspruch 9, wobei das nicht aktive Material Kohlenstoff und ein Bindemittel enthält.

11. Elektrochemische Zelle nach Anspruch 1, wobei der erste Stromkollektor als lang gestreckte Folie ausgebildet ist, die eine erste Seite und eine zweite Seite besitzt, und das erste katodenaktive Materialgemisch mit der ersten Seite des Strom kollektors in Kontakt ist und das zweite katodenaktive Materialgemisch mit der zweiten Seite des Stromkollektors in Kontakt ist.

12. Elektrochemische Zelle nach Anspruch 11, wobei das erste katodenaktive Material SVO enthält und das zweite katodenaktive Material CFₓ enthält.

13. Elektrochemische Zelle nach Anspruch 12, wobei das SVO der Anode der Zelle zugewandt ist.

14. Elektrochemische Zelle nach Anspruch 1, die ferner einen zweiten Stromkollektor umfasst.

15. Elektrochemische Zelle nach Anspruch 14, wobei der erste und der zweite Stromkollektor als lang gestreckte Folien ausgebildet sind, wovon jede eine erste Seite und eine zweite Seite besitzt.

16. Elektrochemische Zelle nach Anspruch 15, wobei das erste katodenaktive Material SVO enthält und das zweite katodenaktive Material CFₓ enthält.

17. Elektrochemische Zelle nach Anspruch 16, wobei das erste katodenaktive Material SVO ist, das mit etwa 3 Gew.-% Graphit und etwa 3 Gew.-% PTFE in Bezug auf das Gesamtgewicht des Gemisches gemischt ist, und das zweite katodenaktive Material CFₓ ist, das mit Kohlenstoff und PTFE mit einem kombinierten Gewichtsanteil von etwa 23 Gew.-% oder mehr in Bezug auf das Gesamtgewicht des Gemisches gemischt ist.

18. Elektrochemische Zelle nach Anspruch 16, wobei ein erster Anteil von SVO mit der ersten Seite des ersten Stromkollektors in Kontakt ist, ein zweiter Anteil von SVO mit der zweiten Seite des ersten Stromkollektors in Kontakt ist, ein dritter Anteil von SVO mit der ersten Seite des zweiten Stromkollektors in Kontakt ist, ein vierter Anteil von SVO mit der zweiten Seite des zweiten Stromkollektors in Kontakt ist und das CFₓ zwischen dem zweiten Anteil von SVO und dem dritten Anteil von SVO eingebettet ist.

19. Elektrochemische Zelle nach Anspruch 1, wobei das erste katodenaktive Material aus der Gruppe gewählt ist, die aus SVO, CSVO, V₂O₅, MnO₂, LiCoO₂, LiNiO₂, LiMnO₂, CuO₂, TiS, Cu₂S, FeS, FeS₂, Kupferoxid, Kupfervanadiumoxid und Gemischen hiervon besteht, wobei das zweite katodenaktive Material aus der Gruppe gewählt ist, die aus CFₓ, Ag₂O, Ag₂O₂, CuF, Ag₂CrO₄, MnO₂, SVO und Gemischen hiervon besteht, und wobei das erste und das zweite katodenaktive Material verschieden sind.

20. Elektrochemische Zelle nach Anspruch 1, wobei die Katode eine Konfiguration besitzt, die aus der Gruppe gewählt ist, die besteht aus SVO/Stromkollektor/CFₓ, wobei SVO der Anode zugewandt ist, CFₓ/erster Stromkollektor/SVO, wobei CFₓ der Anode zugewandt ist, SVO/CFₓ/Stromkollektor/CFₓ/SVO, SVO/erster Stromkollektor/CFₓ/zweiter Stromkollektor/SVO, SVO/erster Stromkollektor/SVO/CFₓ/SVO/zweiter Stromkollektor/SVO, CFₓ/erster Stromkollektor/SVO/zweiter Stromkollektor/CFₓ und CFₓ/erster Stromkollektor/CFₓ/SVO/CFₓ/zweiter Stromkollektor/CFₓ.

21. Elektrochemische Zelle, die umfasst:
a) ein Lithiumanode;
b) eine Katode, die einen ersten Stromkollektor, ein erstes katodenaktives Materialgemisch mit einer ersten Energiedichte und einer ersten Ratenkapazität und ein zweites katodenaktives Materialgemisch mit einer zweiten Energiedichte und einer zweiten Ratenkapazität aufweist, wobei das erste katodenaktive Material SVO ist, das mit etwa 3 Gew.-% Graphit und etwa 3 Gew.-% PTFE in Bezug auf das Gesamtgewicht des Gemisches gemischt ist, um das erste katodenaktive Materialgemisch zu schaffen, und das zweite katodenaktive Material CFₓ ist, das mit Kohlenstoff und PTFE mit einem kombinierten Gewichtsanteil von etwa 23 Gew.-% oder mehr in Bezug auf das Gesamtgewicht des Gemisches gemischt ist, um das zweite katodenaktive Materialgemisch zu schaffen, derart, dass die erste Ratenkapazität des ersten katodenaktiven Materialgemisches größer ist als die zweite Ratenkapazität des zweiten katodenaktiven Materialgemisches und dass die erste Energiedichte des ersten katodenaktiven Materialgemisches größer oder gleich der zweiten Energiedichte des zweiten katodenaktiven Materialgemisches ist;
c) eine Trenneinrichtung, die zwischen der Anode und der Katode positioniert ist, um einen direkten physikalischen Kontakt zwischen ihnen zu verhindern, indem sie zulässt, das elektrochemische Reaktionen stattfinden; und
d) einen Elektrolyt, der die Anode und die Katode aktiviert.

22. Elektrochemische Zelle nach Anspruch 21, wobei die Katode eine Konfiguration besitzt, die aus der Gruppe gewählt ist, die besteht aus SVO/Stromkollektor/CFₓ, wobei SVO der Anode zugewandt ist, CFₓ/erster Stromkollektor/SVO, wobei CFₓ der Anode zugewandt ist, SVO/CFₓ/Stromkollektor/CFₓ/SVO, SVO/erster Stromkollektor/CFₓ/zweiter Stromkollektor/SVO, SVO/erster Stromkollektor/SVO/CFₓ/SVO/zweiter Stromkollektor/SVO, CFₓ/erster Stromkollektor/SVO/zweiter Stromkollektor/CFₓ und CFₓ/erster Stromkollektor/CFₓ/SVO/CFₓ/zweiter Stromkollektor/CFₓ.

## Revendications

1. Cellule électrochimique comprenant :
a) une anode ;
b) une cathode comprenant un premier collecteur de courant, un premier mélange de matériau actif de cathode ayant une première densité d'énergie et une première capacité de débit, et un second mélange de matériau actif de cathode ayant une seconde densité d'énergie et une seconde capacité de débit, dans laquelle la première capacité de débit du premier mélange de matériau actif de cathode est supérieure à la seconde capacité de débit du second mélange de matériau actif de cathode, et la première densité d'énergie du premier mélange de matériau actif de cathode est supérieure ou égale à la seconde densité d'énergie du second mélange de matériau actif de cathode;
c) un séparateur positionné entre l'anode et la cathode pour empêcher un contact physique direct entre elles en permettant la production de réactions électrochimiques; et
d) un électrolyte activant l'anode et la cathode.

2. Cellule électrochimique selon la revendication 1, dans laquelle le premier mélange de matériau actif de cathode comprend un premier matériau actif ayant une première densité d'énergie théorique et le second mélange de matériau actif de cathode comprend au moins un matériau non actif et un second matériau actif ayant une seconde densité d'énergie théorique.

3. Cellule électrochimique selon la revendication 2, dans laquelle la seconde densité d'énergie théorique du second matériau actif est supérieure à la première densité d'énergie théorique du premier matériau actif.

4. Cellule électrochimique selon la revendication 3, dans laquelle le premier matériau actif est du SVO et le second matériau actif est du CFₓ.

5. Cellule électrochimique selon la revendication 4, dans laquelle le matériau non actif comprend du carbone.

6. Cellule électrochimique selon la revendication 5, dans laquelle le matériau non actif comprend en outre un matériau non conducteur.

7. Cellule électrochimique selon la revendication 5, dans laquelle le matériau non actif comprend en outre du polytétrafluoroéthylène.

8. Cellule électrochimique selon la revendication 1, dans laquelle le premier matériau actif de cathode est du SVO mélangé à environ 3 % de graphite et 3 % de PTFE, en poids par rapport au poids total du mélange, et le second matériau actif de cathode est du CFₓ mélangé à du carbone et du PTFE ayant un pourcentage en poids combiné d'environ 23 % ou plus par rapport au poids total du mélange.

9. Cellule électrochimique selon la revendication 2, dans laquelle le matériau non actif est présent dans le second matériau actif de cathode dans une quantité entre 10 et 35 % en poids par rapport au poids total du mélange.

10. Cellule électrochimique selon la revendication 9, dans laquelle le matériau non actif comprend du carbone et un liant.

11. Cellule électrochimique selon la revendication 1, dans laquelle le premier collecteur de courant a la forme d'une feuille allongée ayant un premier côté et un second côté, et le premier mélange de matériau actif de cathode est mis en contact avec le premier côté du collecteur de courant et le second mélange de matériau actif de cathode est mis en contact avec le second côté du collecteur de courant.

12. Cellule électrochimique selon la revendication 11, dans laquelle le premier matériau actif de cathode comprend du SVO et le second matériau actif de cathode comprend du CFₓ.

13. Cellule électrochimique selon la revendication 12, dans laquelle le SVO fait face à l'anode de la cellule.

14. Cellule électrochimique selon la revendication 1, comprenant en outre un second collecteur de courant.

15. Cellule électrochimique selon la revendication 14, dans laquelle les premier et second collecteurs de courant ont la forme de feuilles allongées ayant chacune un premier côté et un second côté.

16. Cellule électrochimique selon la revendication 15, dans laquelle le premier matériau actif de cathode comprend du SVO et le second matériau actif de cathode comprend du CFₓ.

17. Cellule électrochimique selon la revendication 16, dans laquelle le premier matériau actif de cathode est du SVO mélangé à environ 3 % de graphite et 3 % de PTFE, en poids par rapport au poids total du mélange, et le second matériau actif de cathode est du CFₓ mélangé à du carbone et du PTFE ayant un pourcentage en poids combiné d'environ 23 % ou plus par rapport au poids total du mélange.

18. Cellule électrochimique selon la revendication 16, dans laquelle une première partie du SVO est mise en contact avec le premier côté du premier collecteur de courant, une deuxième partie du SVO est mise en contact avec le second côté du premier collecteur de courant, une troisième partie du SVO est mise en contact avec le premier côté du second collecteur de courant, une quatrième partie du SVO est mise en contact avec le second côté du second collecteur de courant, et le CFₓ est pris en sandwich entre la deuxième partie du SVO et la troisième partie du SVO.

19. Cellule électrochimique selon la revendication 1, dans laquelle le premier matériau actif de cathode est choisi dans le groupe comprenant SVO, CSVO, V₂O₅, MnO₂, LiCoO₂, LiNiO₂, LiMnO₂, CuO₂, TiS, Cu₂S, FeS, FeS₂, oxyde de cuivre, oxyde de vanadium-cuivre et mélanges de ceux-ci, et dans laquelle le second matériau actif de cathode est choisi dans le groupe comprenant CFₓ, Ag₂O, Ag₂O₂, CuF, Ag₂CrO₄, MnO₂, SVO et mélanges de ceux-ci, et dans laquelle les premier et second matériaux actifs de cathode sont différents.

20. Cellule électrochimique selon la revendication 1, dans laquelle la cathode a une configuration choisie dans le groupe comprenant SVO/collecteur de courant/CFₓ avec le SVO faisant face à l'anode, CFₓ/premier collecteur de courant/SVO avec le CFₓ faisant face à l'anode, SVO/CFₓ/collecteur de courant/CFₓ/SVO, SVO/premier collecteur de courant/CFₓ/second collecteur de courant/SVO, SVO/premier collecteur de courant/SVO/CFₓ/SVO/second collecteur de courant/SVO, CFₓ/premier collecteur de courant/SVO/second collecteur de courant/CFₓ, et CFₓ/premier collecteur de courant/CFₓ/SVO/CFₓ/second collecteur de courant/CFₓ.

21. Cellule électrochimique comprenant :
a) une anode au lithium ;
b) une cathode comprenant un premier collecteur de courant, un premier mélange de matériau actif de cathode ayant une première densité d'énergie et une première capacité de débit et un second mélange de matériau actif de cathode ayant une seconde densité d'énergie et une seconde capacité de débit, dans laquelle le premier matériau actif de cathode est du SVO mélangé à environ 3 % de graphite et 3 % de PTFE, en poids par rapport au poids total du mélange, pour donner le premier mélange de matériau actif de cathode et le second matériau actif de cathode est du CFₓ mélangé à du carbone et du PTFE ayant un pourcentage en poids combiné d'environ 23 % ou plus par rapport au poids total du mélange pour donner le second mélange de matériau actif de cathode de sorte que la première capacité de débit du premier mélange de matériau actif de cathode soit supérieure à la seconde capacité de débit du second mélange de matériau actif de cathode, et que la première densité d'énergie du premier mélange de matériau actif de cathode soit supérieure ou égale à la seconde densité d'énergie du second mélange de matériau actif de cathode;
c) un séparateur positionné entre l'anode et la cathode pour empêcher un contact physique direct entre elles en permettant la production de réactions électrochimiques; et
d) un électrolyte activant l'anode et la cathode.

22. Cellule électrochimique selon la revendication 21, dans laquelle la cathode a une configuration choisie dans le groupe comprenant SVO/collecteur de courant/CFₓ avec le SVO faisant face à l'anode, CFₓ/premier collecteur de courant/SVO avec le CFₓ faisant face à l'anode, SVO/CFₓ/collecteur de courant/CFₓ/SVO, SVO/premier collecteur de courant/CFₓ/second collecteur de courant/SVO, SVO/premier collecteur de courant/SVO/CFₓ/SVO/second collecteur de courant/SVO, CFₓ/premier collecteur de courant/SVO/second collecteur de courant/CFₓ, et CFₓ/premier collecteur de courant/CFₓ/SVO/CFₓ/second collecteur de courant/CFₓ.
